# EUROPEAN PATENT APPLICATION

(11) **EP 4 800 057 A1**
(43) Date of publication of application: **02.09.2026**
(21) Application number: 24882674.5
(22) Date of filing: 25.09.2024
(51) Int. Cl.: C08J 5/22, B01D 67/00, H01M 8/1053, H01M 8/1032, H01M 8/1039, H01M 8/1062, H01M 8/1067, H01M 8/1004, C25B 13/08, C25B 9/23

(54) **REINFORCED COMPOSITE POLYMER ELECTROLYTE MEMBRANE WITH IMPROVED THERMAL AND DIMENSIONAL STABILITY**

(30) Priority: 24.10.2023 KR 20230142834
(71) Applicant: HD Hyundai Oilbank Co., Ltd., Seosan-si, Chungcheongnam-do 31902 (KR)
(72) Inventor: KIM, Na Young, Yongin-si Gyeonggi-do 16891 (KR); CHOI, Seung Young, Yongin-si Gyeonggi-do 16891 (KR); AHN, Yeon Ho, Yongin-si Gyeonggi-do 16891 (KR); CHO, Min Sang, Yongin-si Gyeonggi-do 16891 (KR); KIM, Tae Eun, Yongin-si Gyeonggi-do 16891 (KR)
(74) Representative: Caspary, Karsten
(86) International application number: PCT/KR2024/014551
(87) International publication number: WO 2025/089645

(57) **Abstract**

The present invention relates to a reinforced composite polymer electrolyte membrane having assured mechanical, structural, and thermal stability.

## Description

### TECHNICAL FIELD

The present invention relates to a reinforced composite polymer electrolyte membrane having assured mechanical, structural, and thermal stability. The polymer electrolyte membrane according to the present invention is typically applicable to hydrogen fuel cells or water electrolysis systems, and may additionally be utilized in energy devices or components such as redox flow batteries and reverse electrodialysis (RED) systems.

### BACKGROUND ART

Polymer electrolyte membranes are solid electrolytes that take the form of a film-type membrane and selectively transmit cations (hydrogen ions) while blocking hydrogen gas. Polymer electrolyte membranes may be used in water electrolysis systems that produce hydrogen or fuel cell systems that generate power using hydrogen.

In both water electrolysis systems and fuel cell systems, a membrane-electrode assembly (MEA) in which both surfaces of the electrolyte membrane is coated with an electrode layer that causes electrochemical reactions is introduced, and in this case, the primary function of the polymer electrolyte membrane or cation exchange membrane is to effectively transport hydrogen ions generated through the catalytic reaction of the electrode layer.

The roles of cation-conducting polymer electrolyte membranes in water electrolysis/fuel cell systems are to achieve performance through hydrogen ion transfer, separate reactant/product gases, and ensure the mechanical robustness required of engineering plastics in the systems.

Among these roles, hydrogen ion transport capability is considered the primary fundamental role, conventional electrolyte membranes have been manufactured in the form of single membranes (single-layer films) using only electrolytes with high ion exchange capacity (IEC) to minimize resistance in the thickness direction, and this trend has been particularly prominent in the field of water electrolysis systems.

When polymer electrolyte membranes are manufactured in the form of a single membrane or single-layer film to increase hydrogen ion conductivity, that is, to maximize the IEC, there is a problem in that the permeability of hydrogen gas also increases as mass transfer properties improve. Particularly in water electrolysis systems, there is a constant risk of fire or explosion as oxygen and hydrogen gases mix, and in fuel cell systems, there is a problem of safety issues and, at the same time, the open circuit voltage of the stack decreases as reactant gases mix.

In addition, the single-layer film form may pose a problem regarding mechanical stability. Specifically, there is a thermal and tensile stability issue that when exposed to an environment where heat and tension exceeding a certain level are applied during the post-processing MEA transfer process, the structure of the MEA may be damaged due to thermal expansion. Moreover, both the fuel cell and the water electrolysis system are operated at temperatures of at least 60 °C, and thermal deformation occurs during long-term operation or the occurrence of local hot spots, making it difficult to maintain selectivity (hydrogen ion conductivity relative to hydrogen gas permeability) and, in severe cases, raising concerns about the generation of pinholes, thus compromising stability during system operation.

Therefore, ensuring thermal and structural stability at fuel cell/water electrolysis process temperatures or operating temperatures may be considered an essential element.

### DETAILED DESCRIPTION OF THE INVENTION

### TECHNICAL PROBLEM

The present invention was conceived to address the above-described problems, and one object of the present invention is to provide a reinforced composite polymer electrolyte membrane capable of ensuring thermal and structural expansion stability by having a composite structure.

The technical problems of the present invention are not limited to the above-mentioned technical problems, and other technical problems that are not mentioned will be clearly understood by a person skilled in the art from the description below.

### TECHNICAL SOLUTION

According to one preferred embodiment, the present invention provides a reinforced composite polymer electrolyte membrane in which an ionomer dispersion is applied onto a support, wherein the ionomer includes a sulfonic group for hydrogen ion conduction, the support is a porous substrate having a higher melting point than the ionomer, the polymer electrolyte membrane includes a composite layer in which the ionomer is impregnated within the support, and an upper electrolyte layer and a lower electrolyte layer including the ionomer above and below the composite layer, and a gradient of sulfur (S) element content (% by weight) is measured during an energy dispersive spectrometer (EDS) analysis of the upper electrolyte layer, the composite layer, and the lower electrolyte layer in a cross-sectional direction.

In this case, the sulfur element content (% by weight) of the upper electrolyte layer, the composite layer, and the lower electrolyte layer may be an average value of the sulfur element content calculated when a point where each layer has a maximum vertical thickness, that is, where a vertical line connecting top and bottom points of each layer is longest based on a specific cross-section of the polymer electrolyte membrane is EDS line-scanned.

In this case, the upper electrolyte layer or the lower electrolyte layer may have a sulfur (S) element content that is 1.5 to 5.0 times higher than the sulfur (S) element content of the composite layer, preferably 1.5 to 3.5 times higher.

The ionomer may be a fluorine-based ionomer or a hydrocarbon-based ionomer mixed with a sulfonate group-containing compound.

The polymer electrolyte membrane may have a total dimension change of 2,000 µm or less at 200 °C according to thermomechanical analysis (TMA), preferably 1,500 µm or less.

The polymer electrolyte membrane may have a total dimension change at 200 °C according to TMA that is 20% to 60% smaller compared to a single membrane which, unlike the polymer electrolyte membrane, consists solely of the ionomer without the support, and has the same membrane thickness and ionomer material type.

The polymer electrolyte membrane may have a thermal transition temperature according to TMA that is 5% to 20% higher compared to a single membrane which, unlike the polymer electrolyte membrane, consists solely of the ionomer without the support, and has the same membrane thickness and ionomer material type.

In addition, a slope of a straight line connecting a point at a thermal transition temperature and a point at 200 °C on a temperature-dependent dimension change curve for the polymer electrolyte membrane according to TMA is 20% to 60% of a slope of an equivalent straight line for a single membrane which, unlike the polymer electrolyte membrane, consists solely of the ionomer without the support, and has the same membrane thickness and ionomer material type.

The polymer electrolyte membrane may have a hydrogen gas permeability of 2.0 mA/cm² or less, and the polymer electrolyte membrane may be applied as a polymer electrolyte membrane (PEM) for a water electrolysis system or a PEM for a fuel cell.

According to another preferred embodiment, the present invention provides a membrane-electrode assembly for a fuel cell or a water electrolysis system, including the above-described polymer electrolyte membrane, and a fuel cell or a water electrolysis system including the above-described polymer electrolyte membrane.

### ADVANTAGEOUS EFFECTS

The above-described reinforced composite polymer electrolyte membrane according to the present invention has the effect of ensuring high thermal-dynamic stability, thereby maintaining high performance even under manufacturing process temperature or operating temperature conditions of a water electrolysis/fuel cell system.

The effects of the present invention are not limited to above-mentioned effects, and include other effects that are clearly understood by a person skilled in the art from the description throughout the specification but are not explicitly mentioned.

### DESCRIPTION OF THE DRAWINGS

FIG. 1 shows cross-sectional scanning electron microscope (SEM) images showing the points subject to an energy dispersive spectrometer (EDS) analysis in the thickness direction of a reinforced composite polymer electrolyte membrane according to a preferred embodiment of the present invention.
FIG. 2 shows cross-section EDS analysis graphs for spectra 27-29 according to Example 2 of the present invention.
FIG. 3 shows a thermomechanical analysis (TMA) curve (dimension change graph by temperature) for samples 1 to 3 according to an embodiment of the present invention.
FIG. 4 shows a schematic cross-sectional diagram of a reinforced composite polymer electrolyte membrane according to the present invention.

### BEST MODE

Hereinafter, preferred embodiments of the present invention will be described in detail with reference to the accompanying drawings. The advantages and features of the present invention and methods for achieving them will become apparent with reference to the embodiments described in detail below together with the accompanying drawings. However, the present invention is not limited to the embodiments disclosed below, but may be implemented in various different forms, and the present embodiments are provided only to make the disclosure of the present invention complete and to fully inform those skilled in the art of the scope of the invention, and the present invention is defined only by the scope of the claims. The same reference numerals refer to the same elements throughout the specification.

Unless otherwise defined, all terms (including technical and scientific terms) used herein may be used as the same meaning as generally understood by one of ordinary skill in the art to which the present invention pertains. In addition, terms defined in commonly used dictionaries are not interpreted in an idealized or overly formal sense unless clearly so defined in the present invention. The terminology used herein is for the purpose of describing embodiments only and is not intended to limit the present invention. Singular forms used herein include plural forms, unless the context clearly indicates otherwise.

"Comprise" and/or "comprising" used herein specify(ies) the presence of mentioned components, steps, operations, and/or devices do(es) not preclude the possibility of the presence or addition of one or more other components, steps, operations, and/or devices.

First, the present invention provides a reinforced composite polymer electrolyte membrane in which an ionomer dispersion is applied onto a support, wherein the ionomer includes a sulfonic group for hydrogen ion conduction, the support is a porous substrate having a higher melting point than the ionomer, the polymer electrolyte membrane includes a composite layer in which the ionomer is impregnated within the support, and an upper electrolyte layer and a lower electrolyte layer including the ionomer above and below the composite layer, and a gradient of sulfur (S) element content (% by weight) is measured during an energy dispersive spectrometer (EDS) analysis of the upper electrolyte layer, the composite layer, and the lower electrolyte layer in a cross-sectional direction.

In this case, the sulfur elemental content (% by weight) values of the upper/lower electrolyte layers and the composite layer may be defined and calculated through various approaches that may be utilized in an EDS analysis. Specifically, an EDS analysis may measure at a specific point, along a specific line, or within a specific area and calculate the elemental content.

In the following embodiments, the present invention experimentally measures values calculated through an EDS analysis for specific points of each layer, but in another embodiment, an average value of the sulfur element content calculated when a point where each layer has a maximum vertical thickness, that is, where a vertical line connecting top and bottom points of each layer is longest based on a specific cross-section of the polymer electrolyte membrane is EDS line-scanned may be defined as the sulfur element content (% by weight) of the upper/lower electrolyte layers and the composite layer.

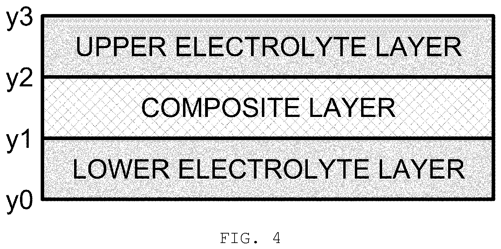

Specifically, referring to FIG. 4, the sulfur element content value of the upper electrolyte layer based on a specific cross-section may be defined as an average value of the sulfur element content calculated when a point where the upper electrolyte layer has a maximum thickness, that is, where a vertical line connecting an upper line (y3) of the upper electrolyte layer and a boundary line (y2) of the lower composite layer is longest, is EDS line-scanned.

Similarly, the sulfur element content of each layer may be calculated in the same manner for the composite layer at a point where the composite layer has a maximum vertical thickness in the y2-y1 direction, and for the lower electrolyte layer at a point where the lower electrolyte layer has a maximum vertical thickness in the y1-y0 direction.

### 1. Materials of electrolytes (ionomers) and composite layers

Any material having a functional group capable of transporting hydrogen ions may be used as the ionomer serving as an electrolyte, and preferably, the ionomer may include a sulfonic group. Specifically, a fluorine-based ionomer or a hydrocarbon-based ionomer mixed with a sulfonic group-containing compound may be adopted.

The support used in the composite structure must have a higher melting point than the ionomer, and any type of porous material having a melting point preferably at least 1.2 times higher is applicable. Typically, a material having a melting point of 300 °C or higher is suitable.

As a material of the support forming the composite layer, polytetrafluoroethylene (PTFE, melting point approx. 327 °C) or expanded PTFE (e-PTFE), ceria (melting point approx. 2,400 °C), polyimide (melting point approx. 247 to 388°C), and the like may be adopted.

As a material of the support, a porous material with a porosity of at least 70% is suitable, and preferably 80% or more.

### 2. Composite layer

The formation of a reinforced composite electrolyte membrane with a composite layer in the core may be confirmed through a scanning electron microscope (SEM) cross-section analysis, and the differences in the thickness-direction distribution of functional group elements (sulfur, S) contained in the ionomer may be confirmed through an energy dispersive spectrometer (EDS) analysis of the upper electrolyte layer, the composite layer, and the lower electrolyte layer in the thickness direction (cross-section).

The sulfur (S) element content of the sulfonic group is lower in the composite layer region than in the pure ionomer layers (electrolyte layers) above and below the composite layer. For the effects of the reinforced composite type to actually manifest in the electrolyte membrane characteristics, the sulfur content of the electrolyte layers must be at least 1.5 times that of the composite layer region, and more effectively at least 2.0 times.

The sulfur content of the electrolyte layers relative to the composite layer is determined by a combination of variables, such as the porosity of the support, the level of porosity reduction due to shrinkage in the thickness direction during the composite process through ionomer coating, the filling rate of the electrolyte (ionomer) into the pores of the support, and the volume ratio of the electrolyte layers to the composite layer. These variables are factors that determine the thermal, mechanical, and dimensional stability of the polymer electrolyte membrane.

For example, an increase in the sulfur element content of the electrolyte layers compared to the composite layer may be seen as the result of a combination of factors: a high content of the support material, which has relatively high thermal stability within the composite layer; a significant decrease in the porosity of the support material due to high-strength shrinkage in the thickness direction during the electrolyte coating process; and the presence of residual pores due to the relatively low electrolyte filling rate within the support pores, which allows water to fill these residual pores primarily during the process of water absorption by the electrolyte membrane, thereby reducing swelling of the membrane itself or external dimension changes caused by water absorption.

Therefore, the sulfur content of the electrolyte layers relative to the composite layer may be increased, and when the sulfur content exceeds 5 times, preferably 3.5 times, this means that the equivalent weight of the sulfonic group in the composite layer is significantly reduced. This means that the equivalent weight exceeds the range of use as an electrolyte, and the hydrogen ion transport capacity of the composite layer is excessively reduced, resulting in a problem where the hydrogen ion transport capacity in the thickness direction relative to the hydrogen ion transport capacity of the entire volume of the electrolyte membrane, i.e., the effective conductivity, is lowered.

### 3. Thermal and dimensional stability

The thermal-dynamic stability of the material may be verified through thermomechanical analysis (TMA). After fixing the electrolyte membrane to the TMA equipment, the final thermal expansion dimension may be verified along with the thermal transition temperature, which is the temperature at which the mobility of the material begins to manifest, that is, the thermal transition temperature, by raising the temperature to 200 °C, which is the decomposition temperature of the sulfonic acid, a functional group of the electrolyte.

A comparative experiment was conducted by manufacturing a single membrane formed solely of a pure electrolyte and a reinforced composite polymer electrolyte membrane according to the present invention using the same process. Compared to the single membrane, the thermal transition temperature was 5% to 20% higher (specifically 5 °C or higher, preferably 10 °C or higher), and the thermal expansion dimension was 20% to 60% smaller (specifically 2,000 µm or less, preferably 1,500 µm or less), confirming that the thermal and dimensional stability was significantly improved.

### Example 1: Manufacture of reinforced composite polymer electrolyte membrane (Sample 1)

3M's middle side chain structure perfluorosulfonic acid (PFSA) was used as the electrolyte (ionomer), with an equivalent weight of 720. The ionomer dispersion was prepared using a 1:1 ratio of water and 1-propanol as a solvent with a 20% by weight solid content.

As a material of the support, e-PTFE with a porosity of 85% was used. The e-PTFE was filled using the above-described electrolyte, and the top and bottom were coated using an applicator so that the composite layer occupied 50% of the total volume in the thickness direction. To remove the solvent from the electrolyte, drying was performed at 70 °C for one hour and annealing was performed at 170 °C for 10 minutes to obtain a reinforced composite membrane in a film shape.

### Example 2: EDS analysis

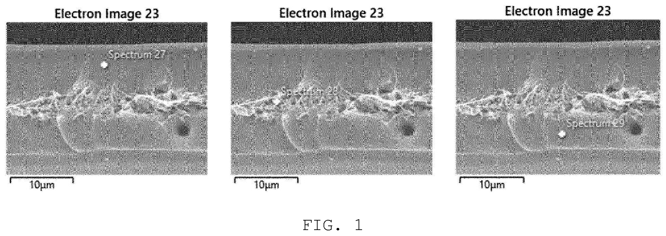

To verify the composite structure of the reinforced composite polymer electrolyte membrane, an EDS analysis was performed using the JEOL JSM-7600F instrument. The amounts of C, S, F, and O elements were measured at an acceleration voltage of 15 kV, and the elemental distributions of the upper electrolyte layer, the composite layer at the core, and the lower electrolyte layer were confirmed. Regarding the proportion of the S element in the upper and lower pure electrolyte layers and the composite layer, it was confirmed that the S element content in the electrolyte layers was two to three times higher. In FIG. 1, Spectrum 27 represents the upper electrolyte layer, Spectrum 28 represents the composite layer, and Spectrum 29 represents the lower electrolyte layer.

**[Table 1]**

| | | **Spectrum 27** | | | **Spectrum 28** | | | **Spectrum 29** | | |
|---|---|---|---|---|---|---|---|---|---|---|
| | **Element** | **Wt%** | **Wt% Sigma** | **Atomic%** | **Wt%** | **Wt% Sigma** | **Atomic%** | **Wt%** | **Wt% Sigma** | **Atomic%** |
| | **C** | 34.0 5 | 0.25 | 45.38 | 35.5 8 | 0.25 | 46.89 | 37.5 3 | 0.31 | 49.64 |
| | **O** | 2.88 | 0.12 | 2.89 | 0.67 | 0.11 | 0.66 | 0.88 | 0.13 | 0.88 |
| | **F** | 58.9 7 | 0.24 | 49.69 | 61.8 3 | 0.25 | 51.50 | 55.6 7 | 0.30 | 46.55 |
| | **S** | 4.10 | 0.08 | 2.05 | 1.92 | 0.08 | 0.95 | 5.92 | 0.13 | 2.93 |
| Total | | 100.0 | - | 100.0 | 100.0 | | 100.0 | 100.0 | - | 100.0 |

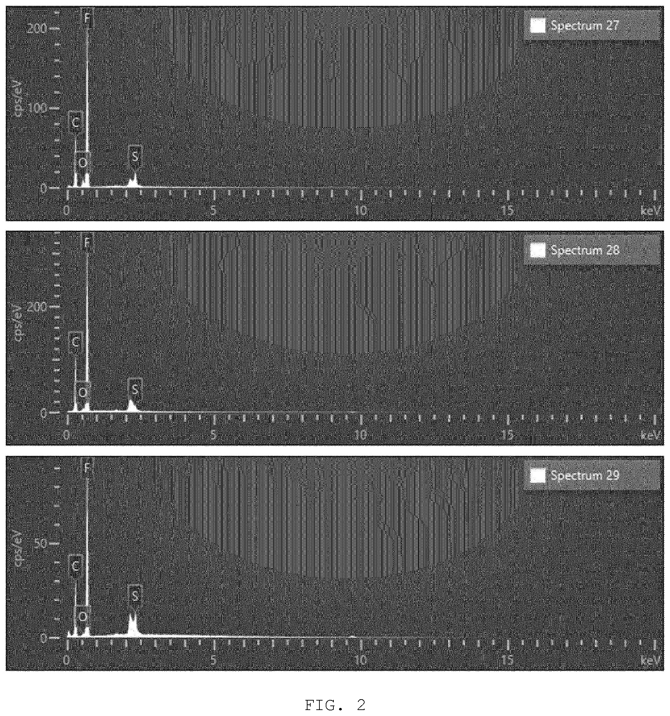

In Table 1, Wt% represents the weight percentage of each component of the substance, Wt% Sigma represents the standard deviation of the weight percentage, and Atomic% represents the percentage of the number of atoms. FIG. 2 is a cross-sectional EDS analysis graph for Spectra 27 to 29.

Referring to Table 1 and FIG. 2, the gradient of sulfur (S) element content (% by weight) in the thickness direction between the upper and lower electrolyte layers and the core composite layer may be clearly confirmed. In particular, the sulfur (S) element content is the most significant indicator in terms of ease of measurement, representativeness of the composite structure as a key element constituting the ionomer functional group, and the correlation between the composition of the composite layer and the control of porosity/filling rate.

### Example 3: TMA analysis

To verify the thermal behavior of the reinforced composite membrane, changes in sample dimensions according to the temperature were measured using a WATERS Discovery TMA 450EM instrument. Specimens with a width of 5 mm and a length of 20 mm or more were mounted, and changes in dimensions were observed while increasing the temperature from 25 °C to 200 °C at a rate of 5 °C per minute. The thermal transition temperature at which the mobility of the material begins was observed first to confirm the transition delay region of the composite membrane structure compared to the single membrane, and the change in length at the final temperature (200°C) was confirmed.

Three samples were used for analysis according to the TMA. Sample 1 is the reinforced composite polymer electrolyte membrane according to Example 1 described above.

The manufacturing example for Sample 2 is as follows. 3M's middle side chain structure PFSA was used as the electrolyte, with an equivalent weight of approximately 720. A first ionomer dispersion was prepared using a planetary mixer using a 1:1 ratio of water and 1-propanol as a solvent with a 20% by weight solid content. A second ionomer dispersion applied to the composite layer was further dispersed using a planetary mixer by adding ceria at a solid content of 8000 ppm to the previously prepared solution.

In the film formation process, the first ionomer dispersion was applied first using an applicator, dried at 70 °C for 30 minutes to remove the solvent, then the second ionomer dispersion was applied in the same manner on the top of the first coated surface and dried at 70 °C for 30 minutes to form a second layer, then the first ionomer dispersion was applied again, which was finally dried at 70 °C for one hour and annealed at 170 °C for 10 minutes to manufacture a three-layer structure.

Sample 3 was manufactured as a control, and the manufacturing example is as follows. 3M's middle side chain structure PFSA was used as the electrolyte, with an equivalent weight of approximately 720. An ionomer dispersion was prepared using a planetary mixer using a 1:1 ratio of water and 1-propanol as a solvent with a 20% by weight solid content.

The prepared ionomer dispersion was applied only once using the same coating method as Samples 1 and 2, and drying and annealing were performed under the same final drying conditions as Samples 1 and 2: drying at 70°C for one hour and annealing at 170 °C for 10 minutes.

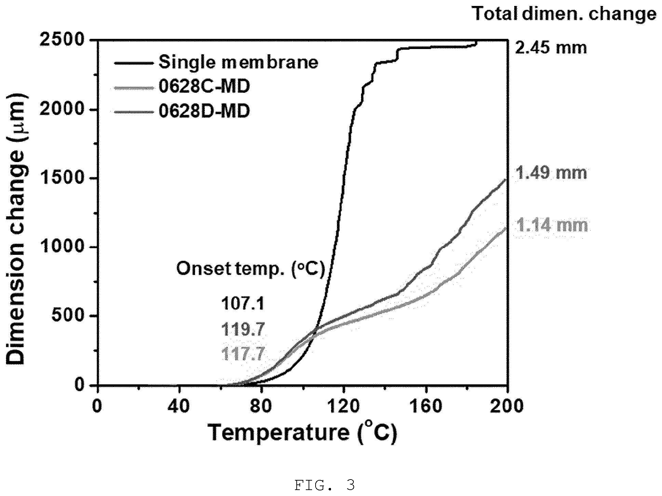

The ratio of the sulfur (S) element content of the electrolyte layers relative to the composite layer, the thermal transition temperature, and the total dimension change at 200 °C according to the EDS analysis results of Samples 1 to 3 are shown in Table 2 below, and the dimension change curve according to temperature change is shown in FIG. 3 (Sample 1 is red 0628C-MD, Sample 2 is blue 0628D-MD, and Sample 3 is black single membrane).

**[Table 2]**

| Classification | Ratio of S element content according to EDS analysis results (electrolyte layers/composite layer) | Thermal transition temperature (°C) | Thermal expansion (mm, @200 °C) |
|---|---|---|---|
| Sample 1 | 3.1 | 119.7 | 1.14 |
| Sample 2 | 2.5 | 117.7 | 1.49 |
| Sample 3 | 1.1 | 107.1 | 2.45 |

In the case of Sample 1, which corresponded to the reinforced composite polymer electrolyte membrane according to the present invention, and Sample 2, which was a form in which ceria is added thereto, the thermal conversion temperature at which mobility begins to manifest was approximately 10 °C higher compared to Sample 3, which was a single membrane. In addition, as the temperature increased thereafter, Sample 3 underwent rapid dimension changes, whereas Samples 1 and 2 formed a gradual delay region. The final dimension change at 200 °C (this temperature is the temperature at which sulfonic groups detach and begin to decompose, and is the upper temperature limit of processes such as annealing process or membrane-electrode assembly (MEA) electrode process) was approximately half that of Sample 3 (see FIG. 3).

Unlike Sample 3, Samples 1 and 2 have a so-called "delay region" in which the full thermal expansion occurs in a relatively higher temperature. This is because during the manufacturing process of the reinforced composite membrane, the electrolyte and support are exposed to the solvent during the film-forming process, and the internal structure of the membrane is rearranged during the drying-annealing process. During drying, as the forces acting differently on the inside of the composite layer and on the surface of the electrolyte membrane compete with each other, the thermal and physical resistance of the material increases.

Meanwhile, it was be observed that although Sample 2 was reinforced by adding ceria, which has a higher melting temperature, Sample 2 exhibited a slightly lower thermal transition temperature and a slightly larger total dimension change at 200 °C compared to Sample 1. This may be because, while Sample 1 was reinforced by impregnating the electrolyte into the three-dimensional node-fibrillar structure of the e-PTFE reinforcing material itself, Sample 2 was manufactured by dispersing ceria in an electrolyte dispersion and applying the mixture, resulting in reinforcement through adsorption onto the aggregated electrolyte polymer unit structure. When a metal oxide is prepared in a network structure and impregnated with the electrolyte in the same manner, the resulting electrolyte membrane can exhibit superior reinforcement properties compared to Sample 1.

In conclusion, when an electrolyte membrane is implemented as a reinforced composite type and an appropriate level of sulfur (S) element content gradient is formed in the thickness direction, the composite effect can be maximized and thermal-dimensional stability can be enhanced.

When a composite layer is implemented to form an appropriate level of sulfur element content gradient, a polymer electrolyte membrane can be manufactured such that the total dimension change at 200 °C according to TMA is 2,000 µm or less, preferably 1,500 µm or less, which is 20% to 60% smaller than the total dimension change of a single membrane.

In addition, the thermal transition temperature, which is the temperature at which mobility begins to manifest, is 5% to 20% higher than that of a single membrane, so the starting point of thermal expansion is delayed to a relatively high temperature range, and thermal-dimensional stability can be obtained throughout the entire range from the operating/manufacturing temperature to the upper limit temperature (200 °C).

In particular, the low thermal expansion dimension at 200 °C is a result of the above-mentioned delay region. This physical characteristic is exhibited by the reinforced composite polymer electrolyte membrane having a gradient of sulfur element content in the thickness direction, and the slope of the straight line connecting the point at the thermal transition temperature and the point at 200 °C on the dimension change curve according to TMA analysis is smaller than the slope of a single membrane, and preferably the slope of the reinforced composite polymer electrolyte membrane may be about 20% to 60% of the slope of a single membrane.

Although embodiments of the present invention have been described above with reference to the attached drawings, those skilled in the art will understand that the present invention may be implemented in other specific forms without changing its technical concept or essential features. Therefore, the above-described embodiments should be understood as illustrative in all respects and not restrictive.

## Claims

1. A reinforced composite polymer electrolyte membrane in which an ionomer dispersion is applied onto a support,
wherein the ionomer includes a sulfonic group for hydrogen ion conduction,
the support is a porous substrate having a higher melting point than the ionomer,
the polymer electrolyte membrane includes a composite layer in which the ionomer is impregnated within the support, and an upper electrolyte layer and a lower electrolyte layer including the ionomer above and below the composite layer, and
a gradient of sulfur (S) element content (% by weight) is measured during an energy dispersive spectrometer (EDS) analysis of the upper electrolyte layer, the composite layer, and the lower electrolyte layer in a cross-sectional direction.

2. The reinforced composite polymer electrolyte membrane according to claim 1, wherein the sulfur element content (% by weight) of the upper electrolyte layer, the composite layer, and the lower electrolyte layer is an average value of the sulfur element content calculated when a point where each layer has a maximum vertical thickness, that is, where a vertical line connecting top and bottom points of each layer is longest based on a specific cross-section of the polymer electrolyte membrane is EDS line-scanned.

3. The reinforced composite polymer electrolyte membrane of claim 1, wherein the upper electrolyte layer or the lower electrolyte layer has a sulfur (S) element content that is 1.5 to 5.0 times higher than the sulfur (S) element content of the composite layer.

4. The reinforced composite polymer electrolyte membrane of claim 1, wherein the upper electrolyte layer or the lower electrolyte layer has a sulfur (S) element content that is 1.5 to 3.5 times higher than the sulfur (S) element content of the composite layer.

5. The reinforced composite polymer electrolyte membrane of claim 1, wherein the ionomer is a fluorine-based ionomer or a hydrocarbon-based ionomer mixed with a sulfonate group-containing compound.

6. The reinforced composite polymer electrolyte membrane of claim 1, wherein the polymer electrolyte membrane has a total dimension change of 2,000 µm or less at 200 °C according to thermomechanical analysis (TMA).

7. The reinforced composite polymer electrolyte membrane of claim 1, wherein the polymer electrolyte membrane has a total dimension change of 1,500 µm or less at 200 °C according to TMA.

8. The reinforced composite polymer electrolyte membrane of claim 1, wherein the polymer electrolyte membrane has a total dimension change at 200 °C according to TMA that is 20% to 60% smaller compared to a single membrane which, unlike the polymer electrolyte membrane, consists solely of the ionomer without the support, and has the same membrane thickness and ionomer material type.

9. The reinforced composite polymer electrolyte membrane of claim 1, wherein the polymer electrolyte membrane has a thermal transition temperature according to TMA that is 5% to 20% higher compared to a single membrane which, unlike the polymer electrolyte membrane, consists solely of the ionomer without the support, and has the same membrane thickness and ionomer material type.

10. The reinforced composite polymer electrolyte membrane of claim 1, wherein a slope of a straight line connecting a point at a thermal transition temperature and a point at 200 °C on a temperature-dependent dimension change curve for the polymer electrolyte membrane according to TMA is 20% to 60% of a slope of an equivalent straight line for a single membrane which, unlike the polymer electrolyte membrane, consists solely of the ionomer without the support, and has the same membrane thickness and ionomer material type.

11. The reinforced composite polymer electrolyte membrane of claim 1, wherein the polymer electrolyte membrane has a hydrogen gas permeability of 2.0 mA/cm² or less.

12. The reinforced composite polymer electrolyte membrane of claim 1, wherein the polymer electrolyte membrane is a polymer electrolyte membrane (PEM) for a water electrolysis system or a PEM for a fuel cell.

13. A membrane-electrode assembly for a fuel cell, comprising the reinforced composite polymer electrolyte membrane according to any one of claims 1 to 12.

14. A membrane-electrode assembly for a water electrolysis system, comprising the reinforced composite polymer electrolyte membrane according to any one of claims 1 to 12.

15. A fuel cell comprising the reinforced composite polymer electrolyte membrane according to any one of claims 1 to 12.

16. A water electrolysis system comprising the reinforced composite polymer electrolyte membrane according to any one of claims 1 to 12.
